# EUROPÄISCHE PATENTSCHRIFT

(11) **EP 4 413 335 B1**
(45) Veröffentlichungstag und Bekanntmachung des Hinweises auf die Patenterteilung: **29.04.2026**
(21) Anmeldenummer: 22786355.2
(22) Anmeldetag: 22.09.2022
(51) Int. Cl.: G01F 23/296

(54) **VIBRONISCHER MULTISENSOR**
VIBRONIC MULTI SENSOR
MULTICAPTEUR VIBRONIQUE

(30) Priorität: 07.10.2021 DE 102021126092
(43) Veröffentlichungstag der Anmeldung: 14.08.2024
(73) Patentinhaber: Endress+Hauser SE+Co. KG, 79689 Maulburg (DE)
(72) Erfinder: LOPATIN, Sergey, 79540 Lörrach (DE); SCHLEIFERBÖCK, Jan, 79595 Rümmingen (DE); BRENGARTNER, Tobias, 79312 Emmendingen (DE)
(74) Vertreter: Endress + Hauser Group Services (Deutschland) AG+Co. KG
(86) Internationale Anmeldenummer: PCT/EP2022/076341
(87) Internationale Veröffentlichungsnummer: WO 2023/057220

(56) Entgegenhaltungen:
- WO-A1-2020/216582
- US-A1- 2018 010 322

## Beschreibung

Die Erfindung betrifft ein Verfahren zur Bestimmung und/oder Überwachung eines vorgebbaren Füllstands eines Mediums in einem Behältnis mit den Merkmalen des Oberbegriffs des ersten Anspruchs. Das Medium befindet sich in einem Behältnis, beispielsweise in einem Behälter oder in einer Rohrleitung. Das gattungsgemäße Verfahren wird beschrieben in der WO 2020/216582 A1.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalter für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanz- oder Eigenfrequenzen, oder anhand von Frequenzen bei einer vorgebbaren Phasenverschiebung zwischen Anrege- und Empfangssignal, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Aus den Dokumenten DE102012100728A1 oder DE102017130527A1 sind zudem verschiedene vibronische Sensoren bekannt geworden, bei denen die Antriebs-/Empfangseinheiten in Form von piezoelektrischen Elementen zumindest teilweise innerhalb der schwingfähigen Einheit angeordnet sind. Mit derartigen und ähnlichen Anordnungen lassen sich vorteilhaft mit einem einzigen Sensor mehrere Prozessgrößen bestimmen und zur Charakterisierung von unterschiedlichen Prozessen heranziehen, wie beispielsweise aus den Dokumenten WO2020/094266A1, DE102019116150A1, DE102019116151A1, DE02019116152A1, DE102019110821A1, DE102020105214A1 oder DE102020116278A1 bekannt geworden. Zur Bestimmung von zumindest zwei verschiedenen Prozessgrößen mittels eines derartigen Multisensors wird die Sensoreinheit einerseits mittels eines Anregesignals zu mechanischen Schwingungen angeregt, und die mechanischen Schwingungen von der Sensoreinheit werden empfangen und in ein erstes Empfangssignal umgewandelt. Zudem wird von der Sensoreinheit ein Sendesignal ausgesendet und ein zweites Empfangssignal empfangen. Anhand des ersten Empfangssignals kann dann eine erste Prozessgröße und anhand des zweiten Empfangssignals eine zweite Prozessgröße ermittelt werden. Das piezoelektrische Element dient im Falle derartiger Multisensoren als Antriebs-/Empfangseinheit und zur Erzeugung der mechanischen Schwingungen mittels des Anregesignals und zur Erzeugung des Sendesignals.

Bei der Verwendung vibronischer Sensoren mit schwingfähigen Einheiten in Form von Schwinggabeln zur Bestimmung und/oder Überwachung eines vorgebbaren Füllstands bzw. eines Grenzstands eines Mediums in einem Behältnis muss zuverlässig erkannt werden, ob die mechanisch schwingfähige Einheit mit dem jeweiligen Medium bedeckt ist oder nicht. Dies ist insbesondere im Fall von sicherheitskritischen Anwendungen, beispielsweise bei Anwendungen, die ein bestimmtes Sicherheits-Integritätslevel (SIL) der jeweils verwendeten Messgeräte erfordern, von großer Bedeutung. Anhand einer Auswertung der Frequenz des die mechanischen Schwingungen der mechanisch schwingfähigen Einheit repräsentierenden Empfangssignals ist allerdings eine genaue Aussage über den Bedeckungsgrad bzw. über eine vollständige Bedeckung der mechanisch schwingfähigen Einheit in manchen Fällen nicht ausreichend genau möglich. Die ermittelte Bedeckung wird beispielsweise durch verschiedene Messparameter, wie jeweils vorherrschende Temperaturen oder auch die Dichte des jeweiligen Mediums, beeinflusst.

Deshalb liegt der vorliegenden Erfindung die Aufgabe zugrunde, die Messgenauigkeit von vibronischen Grenzstandsensoren zu verbessern.

Diese Aufgabe wird gelöst durch ein Verfahren mit den Merkmalen des ersten Anspruchs.

Erfindungsgemäß wird anhand des zweiten Empfangssignals eine Aussage über den Zustand der Sensoreinheit ermittelt. Mittels des Anregesignals werden mechanische Schwingungen der schwingfähigen Einheit erzeugt, welche im Falle, dass die schwingfähige Einheit von Medium bedeckt ist, von den Eigenschaften des Mediums beeinflusst werden. Entsprechend kann anhand des ersten Empfangssignals und gemäß dem vibronischen Messprinzip eine Aussage über den vorgebbaren Füllstand ermittelt werden. Das Sendesignal wird von einer Komponente der Sensoreinheit, beispielsweise dem oder einem piezoelektrischen Element, ausgesendet und empfangen. Beispielsweise kann das Sendesignal entlang einer Messstrecke zwischen den beiden Schwingelementen der in Form einer Schwinggabel ausgestalteten schwingfähigen Einheit, oder entlang einer Messstrecke zwischen einem Schwingelement und einer weiteren Komponente der Sensoreinheit, oder zwischen der Sensoreinheit und einer Wandung des Behältnisses verlaufen. Damit wird auch das zumindest zeitweise und abschnittsweise das Medium durchlaufende Sendesignal durch die physikalischen und/oder chemischen Eigenschaften des Mediums, insbesondere von Medium im Bereich der Sensoreinheit, beeinflusst und kann entsprechend zur Bestimmung der Aussage über den Zustand der Sensoreinheit mittels des Ultraschall-Messprinzips herangezogen werden. So kann beispielsweise das Vorhandensein einer Blockade der schwingfähigen Einheit durch eine Ablagerung oder durch einen im Medium vorhanden festen Körper erkannt werden. Insgesamt ist anhand einer Auswertung des zweiten Empfangssignals somit eine umfassende Zustandsüberwachung der Sensoreinheit möglich.

Dadurch, dass zwei Messprinzipien in einer einzigen Vorrichtung realisiert sind, kann die Messgenauigkeit bezüglich der Detektion des vorgebbaren Füllstandes, bzw. die Grenzstanddetektion, erheblich verbessert werden. Anhand des zweiten Empfangssignals kann erfindungsgemäß eine Aussage über den Zustand der Sensoreinheit gemacht werden, bei der es sich um eine Aussage über eine Blockade im Bereich der Sensoreinheit handelt. Erfindungsgemäß werden das Anregesignal und das Sendesignal periodisch alternierend erzeugt. Auf diese Weise kann die Zustandsüberwachung der Sensoreinheit kontinuierlich vorgenommen werden.

In einer Ausgestaltung des Verfahrens handelt es sich bei dem Anregesignal und/oder bei dem Sendesignal um ein elektrisches Signal mit zumindest einer vorgebbaren Frequenz, insbesondere um ein sinusförmiges, ein rechteckförmiges, ein trapezförmiges, ein dreieckförmiges oder ein sägezahnförmiges Signal. Beispielsweise kann das Anregesignal so gewählt werden, dass die schwingfähige Einheit mittels des Anregesignals zu resonanten Schwingungen angeregt wird.

Auch für das Sendesignal sind verschiedene, unterschiedliche Optionen denkbar. So ist es von Vorteil, wenn es sich bei dem Sendesignal um ein gepulstes Signal, insbesondere um ein Signal mit einer vorgebbaren, vorzugsweise konstant bleibenden, Pulsbreite, handelt.

In einer weiteren Ausgestaltung des erfindungsgemäßen Verfahrens handelt es sich bei dem Sendesignal um ein Signal variabler Frequenz mit Frequenzen innerhalb eines vorgebbaren Frequenzintervalls. Vorzugsweise wird in diesem Frequenzintervall ein sog. Frequenz-Sweep durchgeführt, bei welchem die Frequenz sukzessive innerhalb des vorgebbaren Frequenzintervalls variiert. Auch ein gepulster Frequenz-Sweep kann als Sendesignal dienen.

Es ist von Vorteil, dass, wenn es sich bei dem vorgebbaren Grenzstand um einen maximalen Füllstand des Mediums in dem Behältnis handelt, und im Falle, dass die Amplitude des zweiten Empfangssignals einen vorgebbaren Grenzwert überschreitet, auf das Erreichen des maximalen Füllstands geschlossen wird.

Alternativ ist es von Vorteil, dass, wenn es sich bei dem vorgebbaren Grenzstand um einen minimalen Füllstand des Mediums in dem Behältnis handelt, und im Falle, dass die Amplitude des zweiten Empfangssignals einen vorgebbaren Grenzwert unterschreitet, auf das Erreichen des minimalen Füllstands geschlossen wird. Bei einem sogenannten MIN-Schalter stellt der Bedecktzustand jeweils den sicheren Zustand dar. Beispielsweise im Falle von Medien hoher Viskosität kann es dazu kommen, dass anhand der ersten Empfangssignals keine verlässliche Aussage über den Grenzstand mehr möglich ist. Blockaden der schwingfähigen Einheit durch das, insbesondere viskose, Medium oder anderweitig im Medium vorhandene Partikel, müssen in einem solchen Fall sicher ausgeschlossen werden, was mittels der vorliegenden Erfindung möglich wird.

Bei der Sensoreinheit in Form einer Schwinggabel mit zwei Schwingelementen und zumindest einem piezoelektrischen Element, wobei das piezoelektrische Element zumindest teilweise innerhalb eines Schwingelements angeordnet ist, handelt es sich vorzugsweise um eine Ausgestaltung einer Sensoreinheit gemäß den Dokumenten DE102012100728A1 und DE102017130527A1.

Die vorliegende Erfindung und ihre vorteilhaften Ausgestaltungen werden anhand der nachfolgenden Figuren näher erläutert. Es zeigt:
Fig. 1: eine schematische Skizze eines vibronischen Sensors gemäß Stand der Technik,
Fig. 2: verschiedene mögliche Ausgestaltungen für vibronische Sensoren gemäß Stand der Technik, bei denen piezoelektrische Elemente innerhalb der Schwingelemente angeordnet sind, und
Fig. 3 illustriert eine bevorzugte Ausgestaltung für das erfindungsgemäße Verfahren.

In den Figuren sind gleiche Elemente jeweils mit demselben Bezugszeichen versehen.

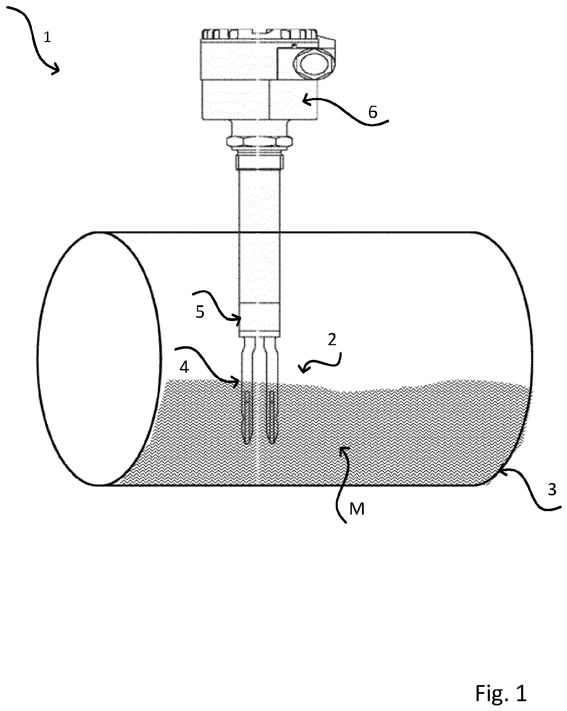

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb realisiert sein. Dargestellt ist in Fig. 1 ferner eine Elektronikeinheit 6, mittels welcher die Signalerfassung, -auswertung und/oder -speisung erfolgt.

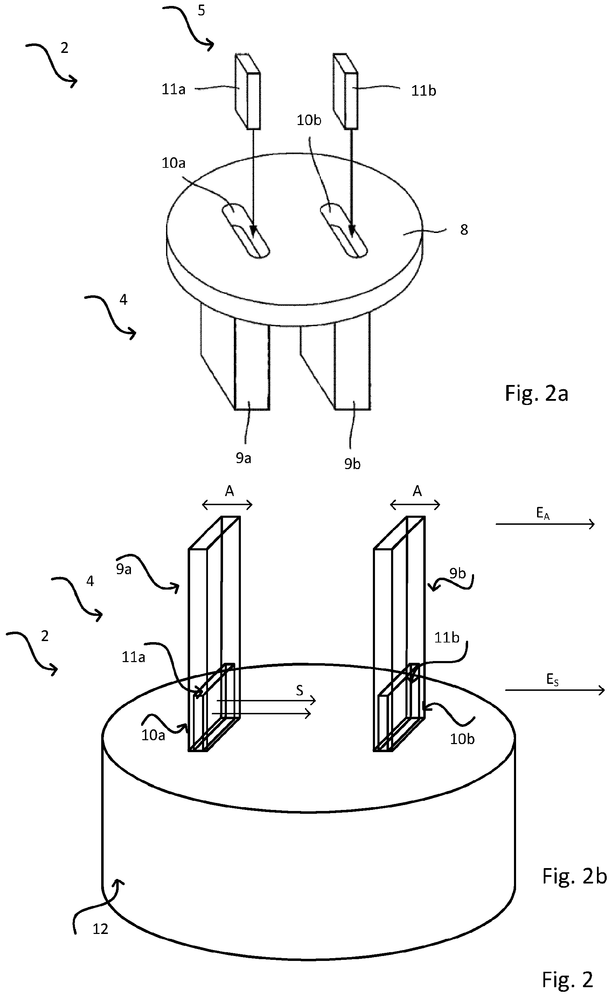

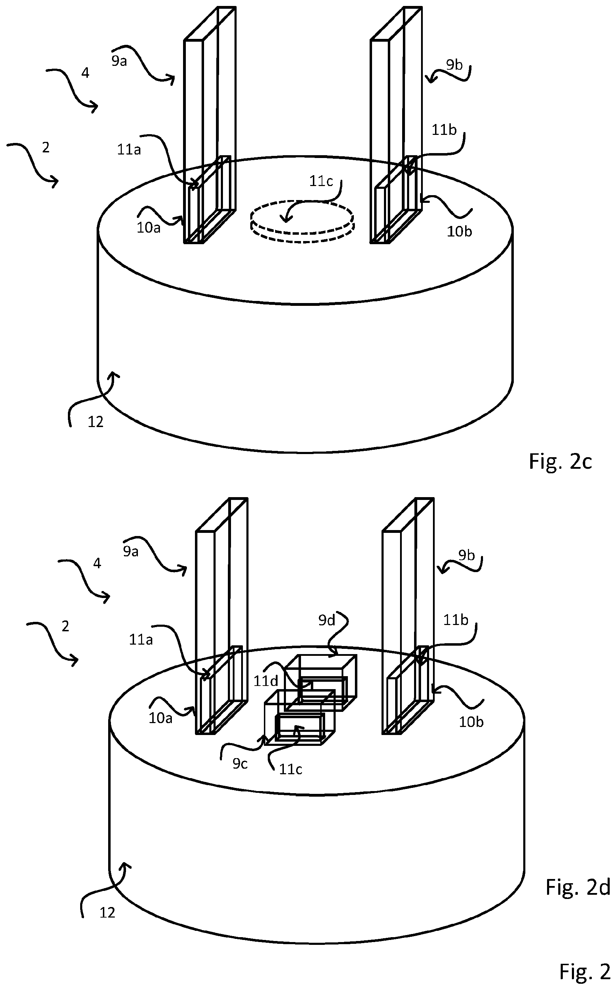

In Fig. 2 sind beispielhaft verschiedene Sensoreinheiten 2 von vibronischen Sensoren 1 gezeigt, bei welchen die piezoelektrischen Elemente 5 in einem Innenvolumen der schwingfähigen Einheit angeordnet sind. Die in Fig. 2a gezeigte mechanisch schwingfähige Einheit 4 umfasst zwei an einer Basis 8 angebrachte Schwingelemente 9a,9b, welche mithin auch als Gabelzinken bezeichnet werden. In jedem der beiden Schwingelemente 9a,9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden. Eine solche sowie ähnliche Anordnungen sind in der DE102012100728A1 ausführlich beschrieben.

Eine weitere mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei auf die DE102017130527A1 verwiesen.

Wie in Fig. 2b schematisch eingezeichnet, wird die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals A₁ und des zweiten Schwingelements 11b mittels eines zweiten Anregesignals A₂. Ebenso ist es sowohl denkbar, dass anhand der mechanischen Schwingungen ein erstes Empfangssignal E_{A}, oder von jedem Schwingelement 9a,9b ein separates Empfangssignal E_{A1} bzw. E_{A2} empfangen wird.

Darüber hinaus kann beispielsweise vom ersten piezoelektrischen Element 11a ausgehend zudem ein Sendesignal S ausgesendet werden, welches von dem zweiten piezoelektrischen Element 11b in Form eines zweiten Empfangssignals E_{S} empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist und wird entsprechend von den Eigenschaften des Mediums M beeinflusst. Ebenso ist es aber denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal E_{S} vom ersten piezoelektrischen Element 11a empfangen. Das Sendesignal S durchläuft in diesem Falle also das Medium M zweimal.

Eine weitere Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals E₁; das erste 11a und zweite piezoelektrische Element 11b dienen der Erzeugung des Sendesignals S bzw. dem Empfangen des zweiten Empfangssignals E₂.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c, 11d durchgeführt. Auch hier kann je Messprinzip auf ein piezoelektrisches Element, z. B. 11b und 11d verzichtet werden. Aus Symmetriegründen ist es dagegen vorteilhaft, stets zwei zusätzliche Schwingelemente 9c, 9d zu verwenden.

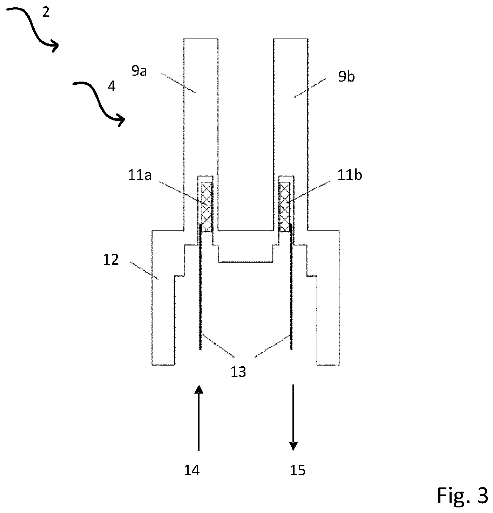

Erfindungsgemäß wird anhand des Sendesignals S eine Aussage über den Zustand der Sensoreinheit 2 generiert. Vorzugsweise ist die Sensoreinheit 2 derart ausgestaltet, dass das zumindest eine piezoelektrische Element 11a zumindest teilweise in einem Innenvolumen der schwingfähigen Einheit 4, insbesondere zumindest teilweise innerhalb eines Schwingstabs 9a der schwingfähigen Einheit 4, angeordnet. Eine derartige Sensoreinheit 2 ist noch einmal schematisch in Fig. 3 für den Fall, dass zwei piezoelektrische Elemente 11a und 11b verwendet werden, dargestellt. Die piezoelektrischen Elemente 11a, 11b sind innerhalb der Schwingelemente 9a, 9b und einander zugewandt angeordnet und befinden sich in einem der Membran 12 zugewandten Endbereich der mechanisch schwingfähigen Einheit 4. Die Zustandsüberwachung erfolgt mittels eines über eine elektrische Zuleitung 13 verbundenen Signalgenerators 14 und eines über eine elektrische Zuleitung verbundenen Amplitudendetektors 15, welche hier jeweils mit einem der beiden piezoelektrischen Elemente 11a, 11b verbunden sind. In anderen Ausgestaltungen sind ggf. andere Anordnungen des Signalgenerators 14 und des Amplitudendetektors 15 vorteilhaft. Mittels einer derartigen Anordnung kann eine Zustandsüberwachung der schwingfähigen Einheit 4 auf besonders einfache Art und Weise mittels einer Amplitudendetektion über den Amplitudendetektor 15 erfolgen und beispielsweise eine Bedeckung der schwingfähigen Einheit 4 mit Medium M besonders einfach und zuverlässig erkannt werden. Dies verbessert die Messgenauigkeit und Sicherheit vibronischer Grenzstandsensoren 1.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronik
- 8: Basis
- 9a, 9b: Schwingelemente
- 10a, 10b: Hohlräume
- 11a, 11b: piezoelektrische Elemente
- 12: Membran
- 13: elektrische Zuleitungen
- 14: Signalgenerator
- 15: Amplitudendetektor

- M: Medium
- P: Prozessgröße
- T: Temperatur
- A: Anregesignal
- S: Sendesignal
- E_{A}: erstes Empfangssignal
- E_{S}: zweites Empfangssignal

## Patentansprüche

1. Verfahren zur Bestimmung und/oder Überwachung eines vorgebbaren Füllstands eines Mediums (M) in einem Behältnis (3) mit einem Sensor (1) umfassend eine Sensoreinheit (2) mit einer mechanisch schwingfähigen Einheit (4) in Form einer Schwinggabel und zumindest einem piezoelektrischen Element (11a),
wobei die Sensoreinheit (2) mittels eines Anregesignals (A) zu mechanischen Schwingungen angeregt wird,
wobei die mechanischen Schwingungen von der Sensoreinheit (2) empfangen und in ein erstes Empfangssignal (E_{A}) umgewandelt werden, und
wobei von der Sensoreinheit (2) ein Sendesignal (S) ausgesendet und ein zweites Empfangssignal (E_{S}) empfangen wird,
**dadurch gekennzeichnet,**
**dass** anhand des ersten Empfangssignals (E_{A}) eine Aussage über den vorgebbaren Füllstand des Mediums (M) in dem Behältnis (3) ermittelt wird,
**dass** anhand des zweiten Empfangssignals (E_{S}) eine Aussage über eine Blockade im Bereich der Sensoreinheit (2) ermittelt wird, indem eine Amplitude des zweiten Empfangssignals (E_{S}) ermittelt wird, indem eine Frequenz des ersten Empfangssignals (E_{A}) ermittelt wird, und indem im Fall, dass die Frequenz des ersten Empfangssignals (E_{A}) einen vorgebbaren Frequenz-Grenzwert über- oder unterschreitet und die Amplitude des zweiten Empfangssignals (E_{S}) einen vorgebbaren Amplituden-Grenzwert unterschreitet, auf die Blockade im Bereich der Sensoreinheit (2) geschlossen wird, und dass das Anregesignal (A) und das Sendesignal (S) periodisch alternierend erzeugt werden.

2. Verfahren nach Anspruch 1,
wobei es sich bei dem Anregesignal (A) und/oder bei dem Sendesignal (S) um ein elektrisches Signal mit zumindest einer vorgebbaren Frequenz handelt.

3. Verfahren nach Anspruch 1 oder 2,
wobei es sich bei dem Sendesignal (S) um ein gepulstes Signal handelt.

4. Verfahren nach Anspruch 1 oder 2,
wobei es sich bei dem Sendesignal (S) um ein Signal variabler Frequenz mit Frequenzen innerhalb eines vorgebbaren Frequenzintervalls handelt.

5. Verfahren nach einem der Ansprüche 1 bis 4,
wobei es sich bei dem vorgebbaren Grenzstand um einen maximalen Füllstand des Mediums (M) in dem Behältnis (3) handelt, und wobei im Falle, dass die Amplitude des zweiten Empfangssignals (E_{S}) einen vorgebbaren Grenzwert überschreitet, auf das Erreichen des maximalen Füllstands geschlossen wird.

6. Verfahren nach einem der Ansprüche 1 bis 4,
wobei es sich bei dem vorgebbaren Grenzstand um einen minimalen Füllstand des Mediums (M) in dem Behältnis (3) handelt, und wobei im Falle, dass die Amplitude des zweiten Empfangssignals (E_{S}) einen vorgebbaren Grenzwert unterschreitet, auf das Erreichen des minimalen Füllstands geschlossen wird.

## Claims

1. Method for determining and/or monitoring a predetermined fill level of a medium (M) in a container (3) using a sensor (1) comprising a sensor unit (2) with a mechanically oscillatable element (4) in the form of a vibrating fork and at least one piezoelectric element (11a),
wherein the sensor unit (2) is excited to mechanical oscillations by means of an excitation signal (A),
wherein the mechanical oscillations are received by the sensor unit (2) and converted into a first received signal (EA), and
wherein a transmission signal (S) is emitted by the sensor unit (2) and a second received signal (ES) is received,
**characterized in that**
based on the first received signal (EA), a statement regarding the predetermined fill level of the medium (M) in the container (3) is determined,
that based on the second received signal (ES), a statement regarding a blockage in the region of the sensor unit (2) is determined by determining an amplitude of the second received signal (ES), by determining a frequency of the first received signal (EA), and by concluding the presence of a blockage in the region of the sensor unit (2) if the frequency of the first received signal (EA) exceeds or falls below a predetermined frequency threshold and the amplitude of the second received signal (ES) falls below a predetermined amplitude threshold, and
that the excitation signal (A) and the transmission signal (S) are generated periodically in alternation.

2. Method according to claim 1,
wherein the excitation signal (A) and/or the transmission signal (S) is an electrical signal having at least one predetermined frequency.

3. Method according to claim 1 or 2,
wherein the transmission signal (S) is a pulsed signal.

4. Method according to claim 1 or 2,
wherein the transmission signal (S) is a variable-frequency signal having frequencies within a predetermined frequency interval.

5. Method according to any of claims 1 to 4,
wherein the predetermined fill level is a maximum fill level of the medium (M) in the container (3), and wherein, if the amplitude of the second received signal (ES) exceeds a predetermined threshold value, the reaching of the maximum fill level is concluded.

6. Method according to any of claims 1 to 4,
wherein the predetermined fill level is a minimum fill level of the medium (M) in the container (3), and wherein, if the amplitude of the second received signal (ES) falls below a predetermined threshold value, the reaching of the minimum fill level is concluded.

## Revendications

1. Procédé pour déterminer et/ou surveiller un niveau de remplissage prédéterminé d'un milieu (M) dans un récipient (3) au moyen d'un capteur (1) comprenant une unité de détection (2) avec un élément mécaniquement oscillant (4) sous la forme d'une fourche vibrante et au moins un élément piézoélectrique (11a),
dans lequel l'unité de détection (2) est excitée en oscillations mécaniques au moyen d'un signal d'excitation (A),
dans lequel les oscillations mécaniques sont reçues par l'unité de détection (2) et converties en un premier signal reçu (EA),
et dans lequel un signal d'émission (S) est émis par l'unité de détection (2) et un second signal reçu (ES) est reçu,
**caractérisé en ce que**
sur la base du premier signal reçu (EA), une indication concernant le niveau de remplissage prédéterminé du milieu (M) dans le récipient (3) est déterminée,
**en ce que**, sur la base du second signal reçu (ES), une indication concernant un blocage dans la zone de l'unité de détection (2) est déterminée en mesurant une amplitude du second signal reçu (ES), en mesurant une fréquence du premier signal reçu (EA), et en concluant à la présence d'un blocage dans la zone de l'unité de détection (2) lorsque la fréquence du premier signal reçu (EA) dépasse ou descend en dessous d'une valeur limite de fréquence prédéterminée et que l'amplitude du second signal reçu (ES) descend en dessous d'une valeur limite d'amplitude prédéterminée,
et **en ce que** le signal d'excitation (A) et le signal d'émission (S) sont générés de manière périodique en alternance.

2. Procédé selon la revendication 1,
dans lequel le signal d'excitation (A) et/ou le signal d'émission (S) est un signal électrique présentant au moins une fréquence prédéterminée.

3. Procédé selon la revendication 1 ou 2,
dans lequel le signal d'émission (S) est un signal pulsé.

4. Procédé selon la revendication 1 ou 2,
dans lequel le signal d'émission (S) est un signal à fréquence variable présentant des fréquences situées dans un intervalle de fréquence prédéterminé.

5. Procédé selon l'une quelconque des revendications 1 à 4,
dans lequel le niveau de remplissage prédéterminé est un niveau de remplissage maximal du milieu (M) dans le récipient (3), et dans lequel, lorsque l'amplitude du second signal reçu (ES) dépasse une valeur limite prédéterminée, il est conclu que le niveau de remplissage maximal est atteint.

6. Procédé selon l'une quelconque des revendications 1 à 4,
dans lequel le niveau de remplissage prédéterminé est un niveau de remplissage minimal du milieu (M) dans le récipient (3), et dans lequel, lorsque l'amplitude du second signal reçu (ES) descend en dessous d'une valeur limite prédéterminée, il est conclu que le niveau de remplissage minimal est atteint.
